Europäisches Patentamt

European Patent Office

Office européen des brevets

(11) Publication number: **0 410 736 A2**

# EUROPEAN PATENT APPLICATION

(21) Application number: 90308174.3

(22) Date of filing: 25.07.90

(51) Int. Cl.⁵: **H01B 11/00**, G02B 6/44

(30) Priority: 28.07.89 GB 8917348

(43) Date of publication of application:
30.01.91 Bulletin 91/05

(84) Designated Contracting States:
AT BE CH DE DK ES FR GB GR IT LI LU NL SE

(71) Applicant: BICC Public Limited Company
Devonshire House Mayfair Place
London W1X 5FH(GB)

(72) Inventor: Renton, George
26, Friern Watch Avenue
London, N12 5TE(GB)

(74) Representative: Ross Gower, Edward Lewis et al
BICC Group Patents & Licensing Department
Network House 1 Ariel WayWay
London W12 7SL(GB)

(54) Electric cable installation.

(57) An electric cable installation is effected by introducing two or more lengths of electric cable, each having at least one passage 5 within and extending along the length of the cable, end-to-end in the ground or in a duct and effecting a joint between the neighbouring ends of each adjacent pair of cable ends in such a way that the electric conductors 1, 3 are electrically connected together and the passages of the cable lengths are smoothly continuous. Thereafter, a flexible optical guide 6 is introduced into and propelled along the passage 5 of the installed cable by fluid drag of a gaseous medium. The cable may be a power cable, a signal or pilot cable or a communication cable.

Fig.1.

## ELECTRIC CABLE INSTALLATIONS

This invention relates to an electric cable installation comprising at least one electric cable which comprises at least one insulated electric conductor and, loosely housed in at least one bore or other passage within and extending throughout the length of the cable, at least one optical fibre and which is buried directly or indirectly in the ground or is housed in a duct, trunking or other enclosure in a building, ship or other structure.

The route of an electric cable installation when buried directly or indirectly in the ground or when housed in a duct, trunking or other enclosure in a multi-storey building, in a ship or in any other structure can extend for several kilometres and, when laying or otherwise introducing an electric cable directly or indirectly in the ground or in such a duct or other enclosure it is necessary to interconnect end-to-end, both electrically and mechanically, several individual lengths of electric cable because the length of any individual electric cable is limited by the amount of cable that can be readily wound on a cable drum without imparting damage to the cable; usually each electric cable is only hundreds of metres in length. Thus, in installing an electric cable along the entire route of an electric cable installation, several cable joints have to be effected. In the case where the electric cable of the installation incorporates at least one optical fibre loosely housed in at least one bore or other passage within and extending throughout the length of the cable, at the position of each cable joint, one or more than one optical fibre splice or joint must also be effected, depending on the number of optical fibres in the cable lengths, thereby substantially increasing the time spent in and hence the cost of effecting the cable installation. This situation is unfortunate because an optical fibre can be manufactured and wound on a drum or reel, without any splices or joints in the optical fibres, in a length of many kilometres and, in most circumstances, in a length substantially greater than the length of the route of an electric cable installation of the kind hereinbefore described.

It is the object of the present invention to provide an improved method of installing directly or indirectly in the ground or in a duct, trunking or other enclosure in a building, ship or other structure an electric cable comprising at least one insulated electric conductor and, loosely housed in at least one bore or other passage within and extending throughout the length of the cable, at least one optical fibre, which method will substantially reduce the cost of effecting such an electric cable installation as compared with the cost of effecting a similar electric cable installation by means of methods hitherto proposed and used.

According to the invention, the improved method comprises laying or otherwise introducing two or more lengths of electric cable, each having within and extending along said length of cable at least one bore or other passage, end-to-end directly or indirectly in the ground or in said duct or other enclosure; effecting a joint between the neighbouring ends of the or each adjacent pair of cable lengths in such a way that the electric conductors of said cable lengths are electrically connected together and the bores or other passages of said cable lengths are substantially smoothly continuous; and thereafter accommodating at least one length of flexible optical guide comprising at least one optical fibre throughout the length of at least one substantially smoothly continuous bore or other passage within the installed electric cable by introducing a leading end of the length of optical guide into an end of the bore or passage and by propelling the optical guide along the bore or passage of the installed cable by fluid drag of a gaseous medium which will have no deleterious effect on the optical guide or on any component of the cable and which is passed through the bore or passage in the desired direction of advance at such a pressure that the length of optical guide is carried along the bore or passage until the length of optical guide is loosely housed in and throughout the length of said bore or passage of the installed electric cable.

Preferably, the length of optical guide is so accommodated in the substantially smoothly continuous bore or other passage of the installed electric cable that it will substantially exceed the length of the bore or passage so that there is an excess length of optical guide within the bore or passage.

By the expression "substantially smoothly continuous" as used to describe the bore or other passage within the installed electric cable is meant a bore or other passage having no step or other abutment protruding into the bore or other passage at the position of a cable joint or elsewhere in the length of cable which might inhibit or restrict carriage of a flexible optical guide along the bore or other passage by the gaseous medium flowing along the bore or passage.

The bores or other passages of adjacent pairs of electric cable lengths to be jointed together may be connected end-to-end by any method which will ensure that the bores or passages of said cable lengths are substantially smoothly continuous. Where, as is preferred, the or each bore or other passage of each cable length is the bore of a tube or pipe separately formed with respect to and assembled with the insulated conductor or conductors of the cable length, two such tubes or pipes are preferably connected end-to-end by means of a sleeve which overlies adjacent axially aligned end parts of the tubes or pipes and which is secured to said neighbouring end parts of the conductor lengths.

Laying or otherwise introducing the lengths of electric cable end-to-end directly or indirectly in the ground or in said duct or other enclosure can be effected by any known technique.

Preferably, the or each flexible optical guide is propelled along the bore or other passage of the installed electric cable by fluid drag of the gaseous medium using the method and apparatus as described and claimed in our British Patent No: 2179471B, which method comprises rotatably mounting a reel or spool on which said length of flexible optical guide is wound within a substantially fluid-tight housing and feeding the leading end of the optical guide through an outlet of the housing into one end of said bore or other passage within the installed electric cable; directly or indirectly connecting the outlet of the housing to said end of the bore or other passage in such a way as to effect a fluid-tight seal; unwinding the optical guide from the reel or spool by a driving mechanism; and continuously introducing the gaseous medium into the fluid-tight housing, the rate at which the optical guide is unwound from the reel or spool by said driving mechanism and the pressure and rate at which the gaseous medium is continuously introduced into the fluid-tight housing being such that the optical guide is carried along said bore or other passage by a combination of said drive and fluid-drag of the gaseous medium until a length of optical guide is loosely housed in and throughout the length of the bore or other passage. It is, however, to be clearly understood that any suitable method hitherto proposed and used of propelling a flexible optical guide along a bore or other passage by fluid drag of a gaseous medium can be employed.

The or each flexible optical guide to be accommodated in said at least one substantially smoothly continuous bore or other passage within the installed electric cable may be a separate optical fibre or it may be an optical fibre element comprising two or more optical fibres assembled together such as, for example, an optical fibre ribbon comprising a plurality of optical fibres extending side by side with their axes lying in a substantially common plane. One optical fibre ribbon structure which is especially suitable for use in the improved method of the present invention is described and claimed in the specification of our British Patent No: 2141558B.

The electric cable may be a single or multi core electric power cable, an electric signal or pilot cable, an electric communication cable comprising a multiplicity of pairs of insulated conductors or any other electric cable having at least one insulated conductor.

The invention further includes an electric cable installation comprising at least one electric cable which comprises at least one insulated electric conductor and, loosely housed in at least one bore or other passage within and extending throughout the length of the cable, at least one optical fibre and which is buried directly or indirectly in the ground or is housed in a duct, trunking or other enclosure in a building, ship or other structure, wherein the electric cable comprises at least two lengths of electric cable electrically and mechanically jointed end-to-end in such a way that the bores or other passages of jointed cable lengths are substantially smoothly continuous and wherein the number of optical fibre splices or joints in the or each optical fibre loosely housed in said at least one smoothly continuous bore or other passage of the jointed cable lengths of the installed electric cable is less than the number of cable joints between said cable lengths.

Preferably, the or each optical fibre loosely housed in said at least one smoothly continuous bore or other passage of the jointed cable lengths of the installed electric cable has no optical fibre splice or joint therein.

The invention is further illustrated by a description, by way of example, of the preferred method of installing in the ground an electric power cable comprising three cable cores and, loosely housed in the bore of a flexible tube assembled with the cable cores, an optical fibre ribbon, with reference to the accompanying drawings, in which:-

Figure 1 is a transverse cross-sectional view of the installed electric cable of the electric cable installation;

Figure 2 is a fragmental sectional side view of the preferred method of connecting end-to-end the tubes of two individual lengths of electric cable shown in Figure 1, and

Figure 3 is a diagrammatic side view of one preferred apparatus for accommodating the optical fibre ribbon into the smoothly continuous bore of the tube of the installed electric cable shown in Figure 1.

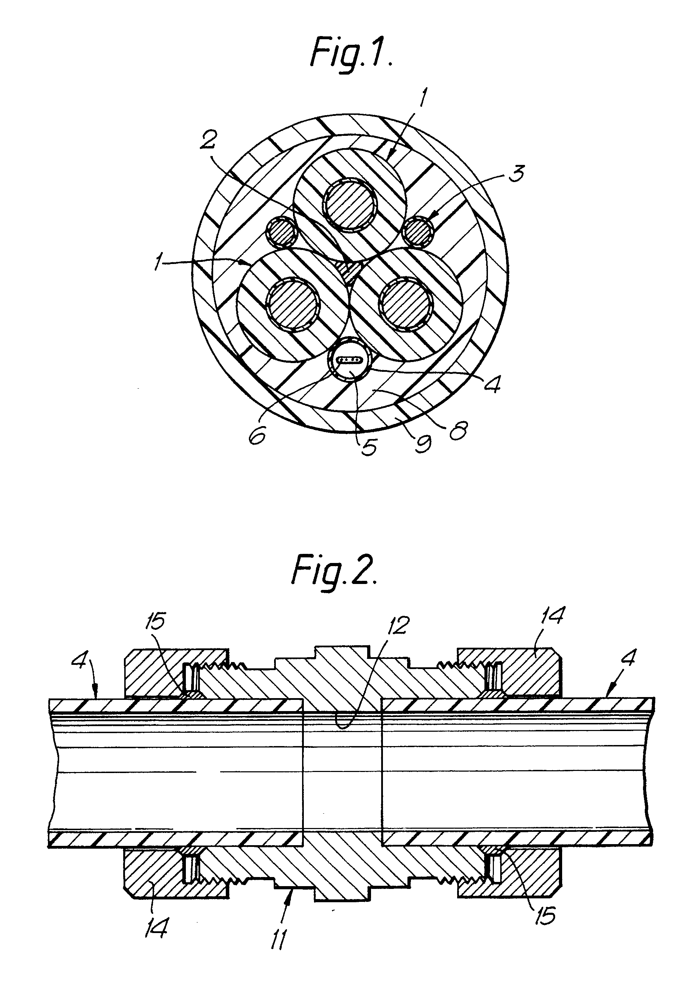

Referring to the drawings, the electric power cable shown in Figure 1 comprises three cable cores 1, each comprising an insulated electric conductor, assembled helically around a central filler 2. Extending helically within the outer interstices bounded by the cable cores 1 are two insulated earth conductors 3 and a plastics tube 4 having a bore 5 in which is loosely housed an optical fibre ribbon 6 comprising a plurality of optical fibres extending side-by-side with their axes lying in a substantially common plane, the length of the optical fibre ribbon being substantially greater than the length of the bore. The assembly is surrounded by an inner sheath 8 and an outer sheath 9.

As will be seen on referring to Figure 2, when the plastics tube 4 of two individual lengths of electric cable of the installed electric power cable shown in Figure 1 are to be connected end-to-end, after a backnut 14 and ring 15 of resilient material have been passed over the end of each tube, the ends of the tubes are introduced into opposite ends of a metal sleeve 11 until they abut a shoulder 12 protruding inwardly of the bore of the sleeve intermediate of its ends. The shoulder 12 has an internal diameter substantially equal to the internal diameters of the tubes 4. Each backnut 14 is then screwed on to the adjacent externally screw threaded end of the sleeve 11 to compress the ring 15 of resilient material between inclined surfaces on the sleeve and backnut immediately adjacent the tube 4 so that the ring tightly grips the tube and a firm mechanical joint is effected between the tubes.

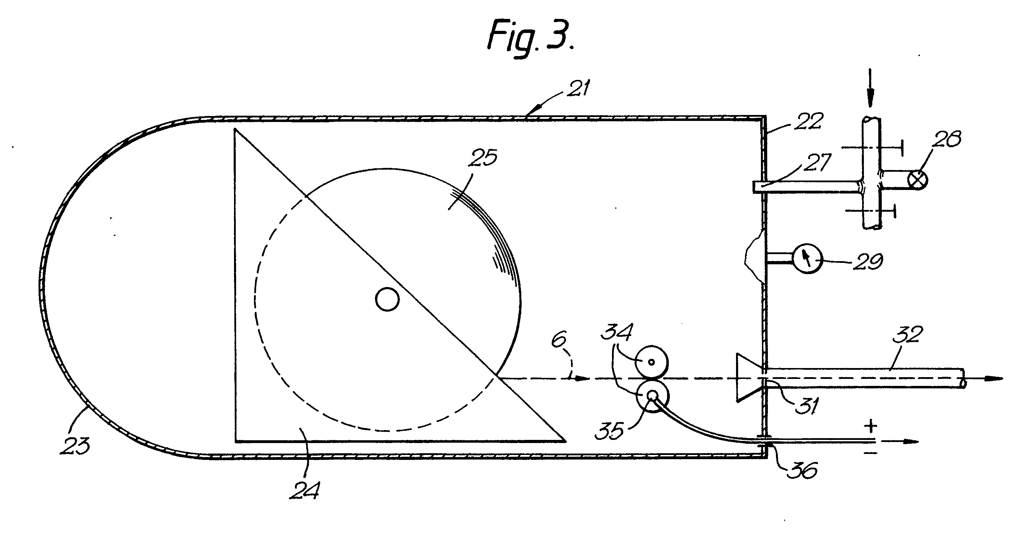

The preferred apparatus shown in Figure 3 comprises a substantially fluid-tight housing 21 of elongate shape having, at one end of the housing, an end wall 22 and, at the other end of the housing, an end wall 23 of hemi-spherical shape. Mounted in the housing 21 is a pay-off stand 24 on which can be freely rotatably mounted a reel 25 on which is wound an optical fibre ribbon 6.

In the end wall 22 of the housing 21 is an inlet port 27 through which pressurised air from a source (not shown) can be introduced into the housing, the rate of introduction of the air being controllable by a valve 28. A visual indication of the pressure of the air within the housing 21 can be given by a pressure meter 29.

Connected to an outlet 31 in the end wall 22 of the housing 21 is a pipe 32 of transparent plastics material for insertion into the bore 5 of the tube 4 of the installed electric power cable into which optical fibre ribbon 6 from the reel 25 is to be introduced.

Positioned within the housing 21 between the reel 25 and the outlet 31 is a pair of rubber-coated pinch wheels 34, one of which can be rotatably driven through a gearbox (not shown) by a 12 v.d.c electric motor 35, the leads from the motor passing through a fluid-tight seal in an aperture 36 in the end wall 22 via an electro-mechanical relay (not shown), controlled by a programmable controller, to a power supply (not shown).

The housing 21 may have at least one window in its wall and may incorporate an internal lighting system to enable behaviour of the optical fibre ribbon 6 and the reel 25 to be continuously monitored, thereby giving an indication of any obstruction in the bore 5 of the tube 4 of the installed electric trailing cable.

When installing the electric power cable in the ground, individual lengths of cable, each incorporating within and extending along the length of the cable a tube 4 having a bore 5, are laid successively in the ground along the route of the installation and, at each of a plurality of jointing bays disposed at spaced positions along the route of the installation, a joint is effected between the neighbouring ends of each adjacent pair of cable lengths in such a way that the electric conductors of the cable lengths are electrically connected together and the tubes 4 of the cable lengths are mechanically connected end-to-end by the method as described with reference to and illustrated in Figure 2 in such a way that their bores 5 are smoothly continuous. After the electric power cable has been so installed, pipe 32 of the apparatus shown in Figure 3 is introduced into the bore 5 of the tube 4 at one end of the cable and is locked to the tube by any appropriate locking means (not shown). Optical fibre ribbon 6 is passed from the reel 25 via a guide tube (not shown) between and in contact with the pair of wheels 34, through another guide tube (not shown), through the pipe 32 and, by means of the motor 35, is fed a short distance into the smoothly continuous bore 5 of the tube 4 of the installed cable.

Air under pressure is then introduced into the housing 21 through the inlet port 27 so that the housing is substantially filled with air at a predetermined pressure, the hemi-spherical end wall 23 of the housing being so shaped as to deflect the air smoothly so that it flows towards and out of the outlet 31 through the pipe 32 and into the smoothly continuous bore 5 of the tube 4 of the installed cable. As the pressure of the air within the housing 21 approaches the required level, the pair of wheels 34 is rotatably driven by the motor at continuously variable speeds between upper and lower limits to produce a pulsing effect serving to provide an intermittent release of optical fibre ribbon 6 from the reel 25. The rate at which the optical fibre ribbon 6 is unwound intermittently from the reel 25 by the pair of wheels 34 and the pressure and rate at which air is continuously introduced into the fluid-tight housing 21 are such that regular pulsed progression of the optical fibre ribbon along the pipe 32 and into the smoothly continuous bore 5 of the tube 4 of the installed cable is produced by a combination of the continuously varied drive and fluid drag of the air. The process is continued until the desired length of optical fibre ribbon 6 is loosely housed in and throughout the length of the smoothly continuous bore 5 of the tube 4 of the installed cable.

It will be appreciated that the pressure of air introduced into the housing 21 will depend on the relative transverse dimensions of the bore 5 of the tube 4 of the installed cable and of the optical fibre ribbon 6 and on the length of bore into which the optical fibre ribbon is to be introduced. By way of example, the pressure of air introduced into the housing 21 preferably lies in the range 50 to 150 psi but pressure substantially greater than this can be employed.

In addition to reducing substantially the cost otherwise incurred in effecting an electric cable installation of the kind hereinbefore described, the improved method of the present invention also has the very important advantage that the cost of manufacture of the electric cable is itself substantially reduced since it is no longer necessary to incorporate the or each flexible optical guide into a bore or other passage in the cable during its manufacture. Thus, conventional and long proved successful methods of manufacturing electric cable can be used. Furthermore, when effecting the cable joints, no or very few optical fibre splices or joints are required to be effected in the field, thereby substantially reducing risk of any unsatisfactory optical fibre splices or joints in the electric cable installation that might otherwise be present.

## Claims

1. A method of installing directly or indirectly in the ground or in a duct, trunking or other enclosure in a building, ship or other structure an electric cable comprising at least one insulated electric conductor and, loosely housed in at least one bore or other passage within and extending throughout the length of the cable, at least one optical fibre, characterised in that the method comprises laying or otherwise introducing two or more lengths of electric cable, each having within and extending along said length of cable at least one bore or other passage 5, end-to-end directly or indirectly in the ground or in said duct or other enclosure; effecting a joint between the neighbouring ends of the or each adjacent pair of cable lengths in such a way that the electric conductors 1, 3 of said cable lengths are electrically connected together and the bores or other passages of said cable lengths are substantially smoothly continuous; and thereafter accommodating at least one length of flexible optical guide 6 comprising at least one optical fibre throughout the length of at least one substantially smoothly continuous bore or other passage within the installed electric cable by introducing a leading end of the length of optical guide into an end of the bore or passage and by propelling the optical guide along the bore or passage of the installed cable by fluid drag of a gaseous medium which will have no deleterious effect on the optical guide or on any component of the cable and which is passed through the bore or passage in the desired direction of advance at such a pressure that the length of optical guide is carried along the bore or passage until the length of optical guide is loosely housed in and throughout the length of said bore or passage of the installed electric cable.

2. A method as claimed in Claim 1, characterised in that the length of optical guide 6 is so accommodated in the substantially smoothly continuous bore or other passage 5 of the installed electric cable that it will substantially exceed the length of the bore or passage so that there is an excess length of optical guide within the bore or passage.

3. A method as claimed in Claim 1 or 2 in which the or each bore or other passage 5 of each cable length is the bore of a tube or pipe 4 separately formed with respect to and assembled with the insulated conductor or conductors 1, 3 of the cable length, characterised in that two such tubes or pipes are connected end-to-end by means of a sleeve 11 which overlies adjacent axially aligned end parts of the tubes or pipes and which is secured to said neighbouring end parts of the tubes or pipes.

4. A method as claimed in any one of the preceding Claims, characterised in that a reel or spool 25 on which said length of flexible optical guide 6 is wound is rotatably mounted in a substantially fluid-tight housing 21 and the leading end of the optical guide is fed through an outlet 31 of the housing into one end of said bore or other passage 5 within the installed electric cable; the outlet of the housing is directly or indirectly connected to said end of the bore or other passage in such a way as to effect a fluid-tight seal; the optical guide is unwound from the reel or spool by a driving mechanism 35; and the gaseous medium is continuously introduced into the fluid-tight housing, the rate at which the optical guide is unwound from the reel or spool by said driving mechanism and the pressure and rate at which the gaseous medium is continuously introduced into the fluid-tight housing being such that the optical guide is carried along said bore or other passage by a combination of said drive and fluid-drag of the gaseous medium until a length of optical guide is loosely housed in and throughout the length of the bore or other passage.

5. A method as claimed in any one of the preceding Claims, characterised in that the or each flexible optical guide is a separate optical fibre.

6. A method as claimed in any one of Claims 1 to 4, characterised in that the or each flexible optical guide is an optical fibre element comprising two or more optical fibres assembled together.

7. A method as claimed in Claim 6, characterised in that the optical fibre element is an optical fibre ribbon 6 comprising a plurality of optical fibres extending side-by-side with their axes lying in a substantially common plane.

8. A method as claimed in any one of the preceding Claims, characterised in that the electric cable is an electric power cable.

9. An electric cable installation comprising at least one electric cable which comprises at least one insulated electric conductor and, loosely housed in at least one bore or other passage within and extending throughout the length of the cable, at least one optical fibre and which is buried directly or indirectly in the ground or is housed in a duct, trunking or other enclosure in a building, ship or other structure, characterised in that the electric cable comprises at least two lengths of electric cable electrically and mechanically jointed end-to-end in such a way that the bores or other passages 5 of jointed cable lengths are substantially smoothly continuous and wherein the number of optical fibre splices or joints in the or each optical fibre loosely housed in said at least one smoothly continuous bore or other passage of the jointed cable lengths of the installed electric cable is less than the number of cable joints between said cable lengths.

10. An electric cable installation as claimed in Claim 9, characterised in that the or each optical fibre loosely housed in said at least one smoothly continuous bore or other passage of the jointed cable lengths of the installed electric cable has no optical fibre splice or joint therein.

## Fig.1.

## Fig.2.

*Fig. 3.*

EP 0 410 736 A2